# EUROPEAN PATENT SPECIFICATION

(11) **EP 0 464 780 B1**
(45) Date of publication and mention of the grant of the patent: **03.04.1996**
(21) Application number: 91110962.7
(22) Date of filing: 02.07.1991
(51) Int. Cl.: B32B 15/01

(54) **Abrasion-resistant cast iron material for rolling rolls and composite rolls**
Verschleissfester Gusseisenwerkstoff für eine Arbeitswalze und Verbundwalze
Fonte résistant à l'abrasion, pour cylindres de laminoirs et rouleaux composites

(30) Priority: 04.07.1990 JP 178038/90; 30.11.1990 JP 338913/90
(43) Date of publication of application: 08.01.1992
(73) Proprietor: Kubota Corporation, Osaka-shi, Osaka 556-91 (JP)
(72) Inventor: Morikawa, Hajime, c/o Amagasaki Factory, Amagashi-shi, Hyogo (JP); Okabayashi, Akitoshi, c/o Amagasaki Factory, Amagashi-shi, Hyogo (JP); Seto, Yosito, c/o Amagasaki Factory, Amagashi-shi, Hyogo (JP); Kimura, Hiroyuki, c/o Amagasaki Factory, Amagashi-shi, Hyogo (JP); Shikata, Takashi, c/o Amagasaki Factory, Amagashi-shi, Hyogo (JP); Nakagawa, Yoshihiro, c/o Amagasaki Factory, Amagashi-shi, Hyogo (JP)
(74) Representative: TER MEER - MÜLLER - STEINMEISTER & PARTNER

(56) References cited:
- EP-A- 0 309 587
- EP-A- 0 322 315
- EP-A- 0 430 241
- DE-A- 3 643 257
- US-A- 4 433 032
- PATENT ABSTRACTS OF JAPAN, vol. 9, no. 282 (M-428)[4005], 9th November 1985; & JP-A-60 124 407 (KUBOTA TEKKO K.K.)

## Description

The present invention relates to an abrasion-resistant cast iron material for rolling rolls and to composite rolls having an outer layer formed of the cast iron material.

The EP 0 309 587 A1 discloses an abrasion-resistant composite roll comprising an outer layer composed of an iron-based alloy containing at least one carbide of W, V, Nb, Ti, Ta, Zr and Hf crystallised from molten metal. The alloy further includes 1,5 to 3,5% C, 0,3 to 3,0% Si, 0,3 to 1,5% Mn, 2 to 7% Cr, up to 9% of Mo, up to 20% W and 3 to 15% V, balance being substantially Fe.

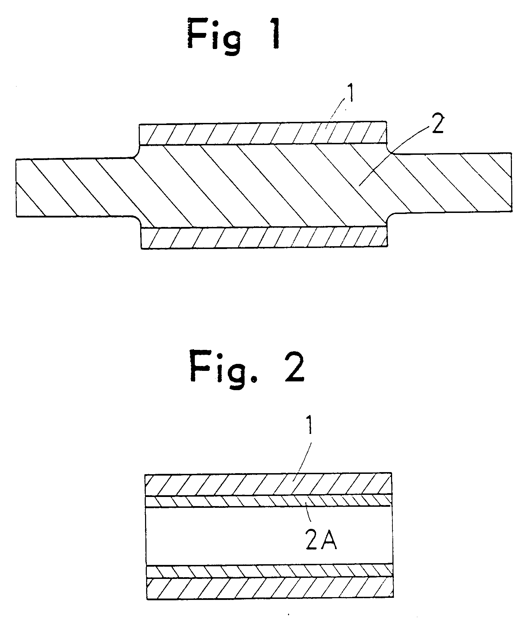

Composite rolls for rolling iron and steel include those comprising an outer layer 1 for use in rolling operation, and a solid inner layer (core) 2 made of a tough material and fused to the outer layer as shown in FIG. 1, those comprising an outer layer 1, and a hollow cylindrical inner layer 2A made of a tough material and fused to the inner surface of the outer layer (so-called "composite sleeve rolls") as shown in FIG. 2, and those comprising an outer layer 1, an inner layer 2 or 2A and an intermediate layer formed there-between. The composite sleeve roll is usually secured to a roll shaft as by a shrink fit for assembly for use in rolling.

Some of the conventional abrasion-resistant materials for outer layers are high-chromium cast iron containing 10 to 25% of Cr, and a high-chromium cast iron material containing crystallized graphite and improved in anti-seizure properties as disclosed in Examined Japanese Patent Publications SHO 58-30382 and SHO 61-16415.

In recent years, the rolling conditions have become ever severer, requiring higher abrasion resistance. As mentioned in the foregoing publications, therefore, one or both of Nb and V are incorporated in a combined amount of up to 2% in the high-chromium cast iron to cause these elements to form fine particles of carbides as nuclei for crystallization and to thereby form a more compacted structure of finer texture which imparts improved abrasion resistance to the material. However, the materials presently in use have yet to be improved in abrasion resistance to meet the requirement.

On the other hand, to give greatly improved abrasion resistance to the material for use in rolling iron and steel, it is thought useful to incorporate a large amount of W into the material. Nevertheless, since the outer layer of the composite roll is formed generally by centrifugal casting, a problem is then encountered in that W is separated off owing to a difference in specific gravity and becomes segregated circumferentially of the layer, consequently presenting difficulty in preparing a material of uniform quality.

### OBJECT AND SUMMARY OF THE INVENTION

An object of the present invention is to provide a cast iron material for rolling rolls which has high abrasion resistance and which can be easily made uniform in quality, and a composite roll having an outer layer made of the cast iron material. An abrasion-resistant cast iron material for rolling rolls having a chemical

composition comprising in wt. %:
1.0-3.0% of C, 0.1-2.0% of Si, 0.1-2.0% of Mn,
3.0-10.0% of Cr, 0.1-9.0% of Mo. 1.5-10.0% of W,
0.01-0.50% of Al, 0.01-0,50% of Ti optionally, 0,5-7,0% of Co
one or both of V and Nb in a combined amount of 3.0-10.0%, balance Fe apart from impurities.

The cast iron material of the present invention has increased hardness at room temperature and at high temperatures and remarkably improved abrasion resistance due to the presence of double carbides having high hardness and formed by C, and Cr, Mo, W, Nb, V or Fe attached to C. Further when subjected to centrifugal casting, the material is unlikely to permit macroscopic segregation, forming a casting of highly uniform structure.

The abrasion-resistant cast iron material of the present invention is well-suited as a material for forming the outer layer of composite rolls. The invention provides a composite roll which comprises an outer layer prepared from the abrasion-resistant cast iron material by centrifugal casting, and an inner layer fused to the inner surface of the outer layer and formed of flaky graphite cast iron (hereinafter referred to briefly as "FC"), spheroidal graphite cast iron (hereinafter referred to as "DCI") or spheroidal graphite cast steel (hereinafter referred to as "SGS"). The composite rolls of the present invention include one which comprises an intermediate layer made of high-carbon cast steel (hereinafter referred to as "AD") and formed between the outer layer and the inner layer by casting. The intermediate layer serves to prevent the alloy components of the outer layer from becoming incorporated into the inner layer when the inner layer is fused to the outer layer.

### BRIEF DESCRIPTION OF THE DRAWINGS

FIG. 1 is a sectional view showing a solid composite roll;
FIG. 2 is a sectional view showing a composite roll in the form of a hollow cylinder;
FIG. 3 is a fragmentary view in section of a horizontal centrifugal casting apparatus; and
FIG. 4 is a fragmentary view in section of a vertical centrifugal casting apparatus.

### DESCRIPTION OF THE PREFERRED EMBODIMENTS

First, a description will be given of the chemical composition (in wt. %) of the abrasion-resistant cast iron material of the invention for composite rolling rolls, chiefly as to the reasons for limiting the proportions of components thereof.
- C:: 1.0-3.0%
C combines primarily with Fe and Cr to form double carbides of the M₇C₃ type having high hardness, and also combines with Cr, Mo, V, Nb or W to form double carbides of the MC type having high hardness. To form these carbides, at least 1.0% of C should be present. If the C content exceeds 3.0%, increased amounts of carbides and brittleness will result, leading to lower cracking resistance, so that the C content should be up to 3.0%.
- Si:: 0.1-2.0%
Since the material of the present invention is a cast alloy, Si is required for assuring the material of flowability when it is in a molten state. About 0.1% of Si becomes inevitably incorporated into the material from component materials used, whereas Si contents over 2.0% are undesirable because lower toughness will then result.
- Mn:: 0.1-2.0%
Mn imparts enhanced hardening ability to the material and combines with S to form MnS, preventing S from rendering the material brittle. About 0.1% of Mn becomes inevitably incorporated into the material from component materials used. However, presence of more than 2.0% of Mn is undesirable since impaired toughness will then result.
- Cr:: 3.0-10.0%
Cr combines with C along with Mo, V, Nb or W, forming hard double carbides and contributing to improved abrasion resistance at high temperatures. Cr also partly forms a solid solution in the matrix to improve the material in hardenability and abrasion resistance. When present in an amount less than 3.0%, Cr will not achieve these effects as desired, failing to give improved abrasion resistance, whereas presence of over 10.0% of Cr leads to lower toughness and is therefore undesirable.
- Mo:: 0.1-9.0%
Mo readily combines with C along with Fe, Cr, V, Nb or W, primarily forming double carbides of the MC type and giving enhanced hardness at room temperature and high temperatures to contribute to improvements in abrasion resistance. Mo produces this effect when present in a smaller amount than W. If the amount is less than 0.1%, Mo fails to afford the desired abrasion resistance, whereas presence of more than 9.0% of Mo entails reduced toughness and is undesirable.
- W:: 1.5-10.0%
W similarly combines with C readily along with Fe, Cr, Mo, V or Nb to form double carbides, giving increased hardness at room temperature and high temperatures and contributing to improvements in abrasion resistance. With less than 1.5% of W present, the desired abrasion resistance will not be available, whereas W contents exceeding 10.0% entail lower toughness and impaired resistance to heat cracking, and are prone to permit macroscopic segregation during centrifgal casting. Accordingly, the W content is up to 10.0%.
- V and/or Nb:: 0.3-10.0% in combined amount
Like Nb, V readily combines with C along with Fe, Cr, Mo or W to primarily form double carbides of the MC type, contributing to increased hardness at room temperature and high temperatures and to improved abrasion resistance. The MC-type double carbide is produced in the form of branches in the direction of thickness, therefore inhibits plastic deformation of the matrix and contributes to improvements in mechanical properties and cracking resistance. It is difficult to obtain this effect unless the two elements are used singly or in combination in an amount of at least 3.0%. However, amounts over 10.0% entail lower toughness and are liable to permit macroscopic segregation during centrifugal casting. Accordingly, V and Nb should be used in a combined amount of up to 10.0%.

The abrasion-resistant cast iron material of the present invention comprises the foregoing alloy components, and the balance which is Fe and impurities. P and S, which become incorporated into the cast iron material from the component materials, embrittle the iron material, so that it is desirable to minimize the P and S contents. The P and S contents should not be greater than 0.2% and 0.1%, respectively.

The abrasion-resistant cast iron materials of the present invention include one which comprises, in addition to the above alloy components, one or at least two of Co, Al and Ti in the amounts specified below.
- Co:: 0.5-7.0%
Co promotes formation of solid solutions of Mo, W and V in austenite during heat treatment and inhibits diffusion of C, therefore gives improved secondary hardenability through tempering and inhibits the diminution of hardness at high temperatures, consequently affording improved abrasion resistance. This effect is very small if less than 0.5% of Co is present but levels off if the amount exceeds 7.0%. Excessive amounts are therefore economically unjustifiable.
- Al:: 0.01-0.50%, Ti: 0.01-0.50%
Al and Ti form oxides in the cast iron material as melted, lower the oxygen content of the melt, impart improved soundness to the product and are effective for forming a finer texture on solidification since the oxides formed act as nuclei for crystallization. These effects will not fully be available if less than 0.01% of these elements are present, whereas if present in amounts exceeding 0.50%, the elements remain as inclusions undesirably. According to the present invention, Al and Ti are used chiefly for forming a structure of finer texture on casting to thereby give improved abrasion resistance to the material. Thus, the presence of these elements is not intended merely for degassing.

The abrasion-resistant cast iron material of the present invention is useful for two-layer composite rolls comprising an outer layer and a solid or hollow cylindrical inner layer fused to the outer layer, or for three-layer composite rolls further comprising an intermediate layer formed between the outer layer and the inner layer as a material for forming the outer layer.

The inner layer of the composite roll must be made of a material containing crystallized graphite for the following reasons, i.e., FC, SGS or DCI.
(1) When used for rolling, the roll is inevitably overloaded (for example, when engaging two sheets). The outer layer material, which is as high as 21000 to 23000 kg/mm² in Young's modulus, is then subjected to a great stress. If the Young's modulus of the inner layer material forming the composite roll is low, the roll is flattened when overloaded for the inner layer material to absorb the load. Accordingly, the roll is usable with increased safety when the inner material layer has a low Young's modulus. For the inner layer material to have a low Young's modulus of up to 20000 kg/mm², the material needs to contain crystallized graphite.
(2) The special alloy forming the outer layer is subjected to secondary hardening through tempering and is generally such a material that residual stress is difficult to remove therefrom. Accordingly, when the outer layer material is hardened by a heat treatment, undergoing expansion due to transformation, the outer layer is subjected to a compressive stress and the inner layer to a tensile stress. If the tensile stress on the inner layer material becomes excessive, the inner layer breaks or the boundary between the inner and outer layers fractures, breaking down the roll. The break is avoidable by annealing the composite roll to relieve the roll of strain and the inner layer material of the residual stress However, if the strain relieving annealing is effected at a high temperature, the outer layer will have a reduced hardness. Accordingly, the roll needs to be subjected to the strain relieving annealing treatment at a low temperature. For this purpose, the inner layer material must contain crystallized graphite.
(3) While in use, the roll is heated by the material being rolled (to a temperature of about 1000° C). The roll must be adapted to release heat effectively so as to retain the specified shape free of thermal deformation. Accordingly, the inner layer needs to have high heat conductivity and must therefore be made of a material containing crystallized graphite.
(4) The roll neck portions must have strength to withstand bending forces and the motor torque. Since an impact load is likely to act on these portions, the portions need also to have toughness. Presence of crystallized graphite serves to give improved toughness.

Next, a description will be given of the features of various inner layer materials for the composite roll and preferred compositions (in wt. %) thereof. While the inner layer needs to contain graphite, the high alloy components of the outer layer become inevitably incorporated into the inner layer when the inner layer is fused to the outer layer. The composition needs to be determined in view of these points.

### (1) In the case of FC

FC is low in Young's modulus (10000 to 15000 kg/mm²), contains flaky graphite, therefore readily permits removal of residual stress and has high heat conductivity. However, having strength of up to about 30 kg/mm², this material is not suited to use in composite rolls for use under a great rolling load.

Given below are an example of preferred composition of FC and the reasons for limiting the proportions of the components.
- C:: 2.5-4.0%
C is required to crystallize out graphite. Less than 2.5% of C results in an insufficient amount of graphite, whereas presence of over 4.0% of C produces an excess of graphite, leading to lower strength.
- Si:: 0.8-2.5%
Si promotes the crystallization of graphite. With less than 0.8% of Si present, insufficient graphitization will result, whereas presence of more than 2.5% of Si embrittles the matrix.
- Mn:: 0.2-1.5%
Mn acts to reinforce the matrix and prevent the harm of S. With less than 0.2% of Mn present, this effect is almost unexpectable, whereas more than 1.5% of Mn embrittles the material.
- P and S:: each up to 0.2%
The smaller the P and S contents, the better since these are impurity elements. These contents are to be limtied to 0.2% if greatest. Materials lower in the concentrations of these elements are more costly. In view of economy, therefore, presence of at least about 0.01% of P and S will be inevitable.
- Ni:: 0.5-3.0%
Ni is effective for graphitization and reinforcement of the matrix. This effect is almost unexpectable if less than 0.5% of Ni present, whereas if more than 3.0% of Ni is used, an untransformed structure is liable to remain to entail lower strength.
- Cr and Mo:: each up to 2.0%
Although Cr and Mo act to reinforce the matrix, excessive amounts of these elements lead to inhibited graphitization. To reinforce the matrix, at least 0.1% of Cr and Mo are preferably present, whereas to ensure effective graphitization, the amounts of these elements, inclusive of those introduced from the outer layer, should not exceed 2.0%.
- W, V, Nb and Co:: up to 4% in combined amount
These elements become inevitably incorporated into the inner layer from the outer layer. None of W, V and Nb are effective for improving the inner layer material. Co, although slightly effective to give improved strength, need not be used positively. These elements are therefore interpreted as impurities and are allowed to be present insofar as they do not impair the mechanical properties of the inner layer material. The permissible limit is 4% in combined amount.

FC which comprises the above components further contains a substantial amount of Fe as the balance. Given below is the composition of the material FC as melted before being fused to the outer layer, i.e., before casting. The melt composition is determined in view of the amounts of components to be incorporated into the inner layer from the outer layer so that the inner layer as fused to the outer layer has the composition described above.
2.5-4.0% of C, 0.8-2.5% of Si, 0.2-1.5% of Mn,
up to 0.2% of P, up to 0.2% of S, up to 3.0% of Ni,
up to 2.0% of Cr, up to 2.0% of Mo, and
the balance substantially Fe.

### (2) In the case of DCI

DCI is 15000 to 18000 kg/mm² in Young's modulus and contains a large amount of graphite, which is spheroidal unlike the graphite in FC and therefore imparts high strength to the cast iron. DCI is therefore suitable for forming the inner layer. Further as disclosed in Examined Japanese Patent Publications SHO 59-52930 and SHO 59-52931, when the material is held heated in a temperature range (780 to 900° C) in which ferrite and austenite are conjointly present and thereafter quenched at a rate of 200 to 800° C/hr to transform austenite to pearlite of finer texture, the matrix structure is converted to a mixture of two phases, i.e., ferrite and pearlite. This structure is resistant to cracking and amenable to the removal of residual stress. The heat treatment for the conversion to the two-phase structure is conducted before the outer layer of the composite roll is heat-treated for hardening.

Given below are an example of preferred composition of DCI and the reasons for limiting the proportions of the components.
2.5-4.0% of C, 1.3-3.5% of Si, 0.2-1.5% of Mn,
up to 0.2% of P, up to 0.2% of S, 0.5-3.0% of Ni,
up to 2.0% of Cr, up to 2.0% of Mo,
up to 4% of W, V, Nb and Co combined,
0.02-0.1% of Mg, and the balance substantially Fe.

The reasons for limiting the proportions of the components other than Si and Mg are the same as those given for FC, so that these two components will be described.

Si is an element for promoting graphitization. Mg is incorporated into DCI for spheroidizing graphite. Since Mg is a powerful element inhibiting graphitization, graphitization in the presence of Mg requires presence of at least 1.3% of Si, whereas presence of more than 3.5% of Si embrittles the matrix, permits precipitation of a large amount of ferrite and results in reduced strength.

Mg acts to spheroidize graphite. At least 0.02% of Mg should be present to ensure this effect, whereas presence of over 0.1% of Mg inhibits graphitization and renders the material susceptible to defects on casting.

Given below is an example of preferred composition of DCI as melted before it is fused to the outer layer.
2.5-4.0% of C, 1.3-3.5% of Si, 0.2-1.5% of Mn,
up to 0.2% of P, up to 0.2% of S, up to 3.0% of Ni,
up to 2.0% of Cr, up to 2.0% of Mo, 0.02-0.1% of Mg
and the balance substantially Fe.

### (3) In the case of SGS

SGS has a high Young's modulus of 17000 to 20000 kg/mm², contains a reduced amount of graphite and therefore can not be readily relieved of residual stress. The steel is not highly amenable to casting and requires a great riser or the like. Nevertheless, the material is excellent in strength and can be easily given high strength of at least 40 kg/mm².

Given below are an example of preferred composition of SGS and the reasons for limiting the proportions of the components.
1.0-2.3% of C, 0.5-3.0% of Si, 0.2-1.5% of Mn,
up to 2.0% of P, up to 0.2% of S, 0.5-3.0% of Ni,
up to 2.0% of Cr, up to 2.0% of Mo,
up to 4.0% of W, V, Nb and Co combined, and
the balance substantially Fe.

The reasons for limiting the proportions of the components other than C and Si are the same as those given for FC, so that these two components will be described.

C is required for causing graphite to crystallize out. With less than 1.0% of C present, it is difficult to effect crystallization of graphite, whereas presence of more than 2.3% of C produces graphite of collapsed shape to result in reduced strength.

Si is required for graphitization. If less than 0.5% of C is present, it is difficult to effect the crystallization of graphite, whereas more than 3.0% of C embrittles the matrix.

Given below is an example of preferred composition of SGS as melted before it is fused to the outer layer.
1.0-2.3% of C, 0.5-3.0% of Si, 0.2-1.5% of Mn,
up to 0.2% of P, up to 0.2% of S, up to 3.0% of Ni,
up to 2.0% of Cr, up to 2.0% of Mo, and
the balance substantially Fe.

Next, the intermediate layer will be described. The intermediate layer is formed to diminish the amounts of alloy components of the outer layer that will migrate into the inner layer. However, the intermediate layer itself needs to have strength of at least about 30 kg/mm². If the strength is insufficient, the boundary between the outer layer and the intermediate layer will break, permitting separation of the outer layer. Since large amounts of alloy components are released from the outer layer and become mixed with the intermediate layer to inhibit graphitization, the material for the intermediate layer needs to fulfill the requirement of not to permit crystallization of graphite and to have high strength. For this reason, AD is suitable as a material for the intermediate layer. Given below are an example of preferred composition of AD and the reasons for limiting the proportions of components thereof.
- C:: 1.0-2.5%
C contributes to improvements in strength. If the C content is less than 1.0%, a high solidification point will result, rendering the intermediate layer to fuse to the outer layer insufficiently, whereas if more than 2.5% of C is present, excessive amounts of carbides will be formed to embrittle the steel.
- Si:: 0.5-1.5%
Si is effective for promoted degasification and imparts improved flowability to the steel in a molten state. With less than 0.5% of Si present, these effects are not expectable, whereas Si contents higher than 1.5% embrittle the steel.
- Mn:: 0.2-1.5%
- P:: up to 0.2%
- S:: up to 0.2%
Mn, P and S are limited to the respective ranges mentioned above for the same reasons as those given for FC.
- Ni:: up to 1.5%
Ni acts to reinforce the material. However, if the Ni content exceeds 1.5%, this effect levels off, and an untransformed structure is liable to occur to entail lower strength.
- Cr and Mo:: each up to 2.0%
Cr and Mo act to reinforce the material. Preferably, at least 0.2% of these elements should be present to be effective. Nevertheless, presence of more than 2.0% of the elements conversely leads to impaired mechanical properties.
- W, V, Nb and Co:: up to 8% in combined amount
These elements inevitably become mixed with the intermediate layer from the outer layer although having little or no effect to give an improved quality to the intermediate layer. Presence of up to 8% of these elements is permissible since they do not impair the mechanical properties of the intermediate layer material when used in this range.

The material for the intermediate layer comprises, in addition to the above components, a substantial amount of Fe as the balance.

Given below is an example of composition of AD as melted before being fused to the outer layer. The melt composition is determined in view of the amounts of components to be incorporated into the intermediate layer from the outer layer so that the intermediate layer as fused to the outer layer has the composition described above.
1.0-2.5% of C, 0.5-1.5% of Si, 0.2-1.5% of Mn,
up to 0.2% of P, up to 0.2% of S, up to 1.5% of Ni,
up to 2.0% of Cr, up to 2.0% of Mo and
the balance substantially Fe.

The inner layer material to be cast inside the intermediate layer is one of those already stated. The amounts of outer layer components which will become mixed with the inner layer material are greatly reduced owing to the presence of the intermediate layer.

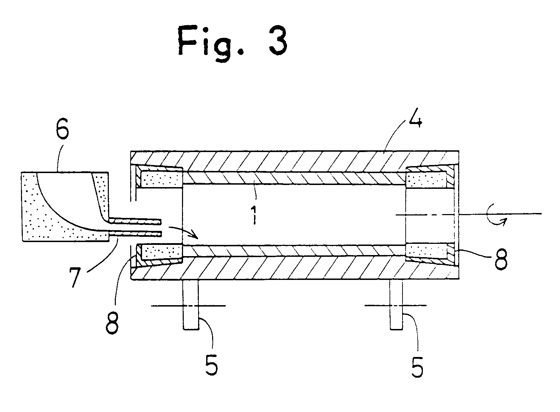

The outer layer of the composite roll is formed by centrifugal casting. FIG. 3 shows a centrifugal casting apparatus of the horizontal type which comprises a mold 4 rotatably supported by rotatable rollers 5, 5. The material for the outer layer in a molten state is poured into the mold 4 from a pouring basin 6 through a trough 7. Indicated at 8 is melt stopping sand mold. The inner layer, which is solid, is cast by positioning the centrifugal casting mold 4 upright with the outer layer 1 formed therein, attaching an upper mold member and a lower mold member to the respective ends of the mold 4 for forming the outer layer to construct a stationary mold assembly, and pouring the inner layer material in a molten state. With the horizontal centrifugal casting apparatus, portions of the melt poured into the mold move upward and downward with rotation and are subjected to variations in G, while the mold is prone to vibration due to eccentricity of the rollers or mold or to flaws, rendering the melt components liable to move. As a result, segregation is liable to occur owing to the movement of components. Accordingly, it is desirable to cast the material at a relatively low temperature of up to about 70° C higher than the solidification starting temperature.

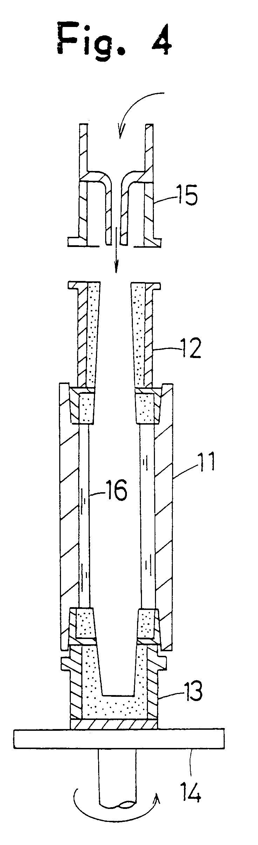

FIG. 4 shows a centrifugal casting apparatus of the vertical type which comprises a mold 11, and an upper mold member 12 and a lower mold member 13 attached to the mold upper and lower ends to form a mold assembly. The mold assembly is mechanically fixed to a rotatable base 14 concentrically therewith. Accordingly, the molten outer layer material 16 poured into the mold assembly through a pouring basin 15 and ascending and adhering to the inner surface of the mold 11 under the action of a centrifugal force is less likely to be subjected to variations in G or vibration. Consequently, centrifugal casting with the vertical apparatus is less likely to permit segregation and can therefore be conducted at a higher temperature. This is effective for achieving an improved work efficiency and precluding casting defects due to introduction of extraneous matter. It is of course possible to fix the centrifugal casting mold 11 only to the base 14 to cast the outer layer first, and thereafter cast the inner layer with a stationary mold assembly including the upper and lower mold members.

The abrasion-resistant cast iron material of the invention forming the outer layer of the composite roll forms a satisfactory hardened structure when the entire roll is hardened, after the casting of the outer layer, in the temperature range of from the hardening temperature (austenitizing temperature) to 400-650° C at a cooling rate of at least 250° C/hr. The material is tempered at a temperature of 500 to 600° C once to several times.

While the abrasion-resistant cast iron material of the present invention is used primarily for the outer layers of rolling rolls, the material is usable also for rollers in equipment attached to rolling apparatus, such as hot line table rollers and like hollow cylindrical rollers, as an outer layer material therefor.

Examples are given below wherein composite rolls were produced using abrasion-resistant cast iron materials of the invention for the outer layers thereof for use in rolling operations.

### Example A

(1) Each of molten outer layer materials of the composition listed in Table 1 was poured into a centrifugal casting mold (420 mm in inside diameter) of the horizontal type at a pouring temperature of the solidification starting temperature plus 50° C. The amount of melt poured in corresponded to a wall thickness of 65 mm. High-chromium cast iron material having improved abrasion resistance was used as the conventional example listed. The composition of the melt was determined from a sample collected from the ladle before pouring. 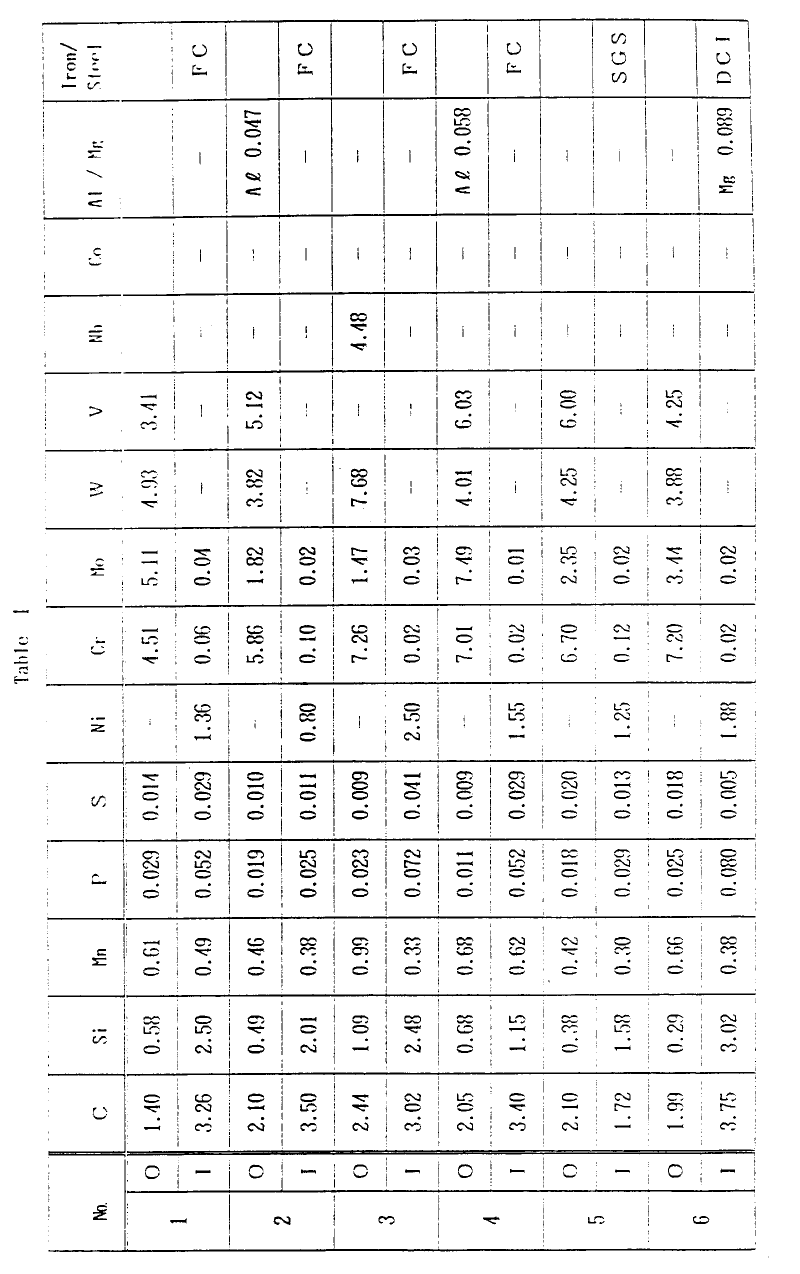 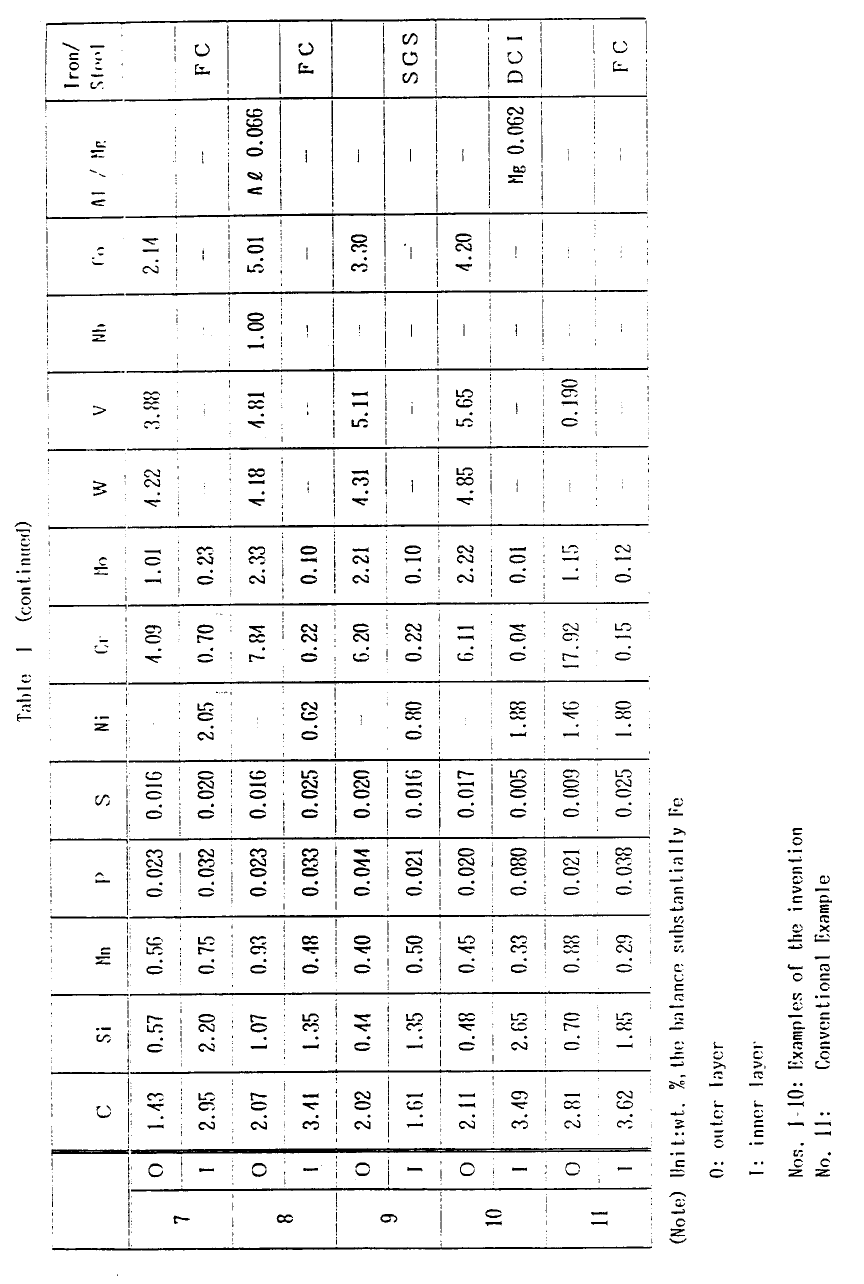
(2) After the outer layer was formed, the mold having the inner layer therein was positioned vertically, upper and lower mold members were attached to the resective ends of the mold, and the molten inner layer material listed in Table 1 was poured into the mold assembly.
(3) The roll blank obtained was removed from the mold assembly on a later day by disassembling the assembly, roughly machined, then held at 1000° C for 2 hours, and thereafter cooled first to 450° C at a rate of 420° C/hr and subsequently to room temperature at a rate of 50° C/hr. The resulting block was subjected to heat-treatment for tempering twice by holding the block at 550° C for 10 hours each time. Table 2 below shows the surface hardness of the outer layer thus heat-treated.

**Table 2**

| No. | 1 | 2 | 3 | 4 | 5 | 6 | 7 | 8 | 9 | 10 | 11 |
|---|---|---|---|---|---|---|---|---|---|---|---|
| Hardness (Hs) | 80 | 85 | 86 | 86 | 84 | 84 | 83 | 86 | 84 | 85 | 85 |

(4) The trunk portion of the roll was cut perpendicular to its axis, and the section of the outer layer was observed with the unaided eye. No segregation of components was found in any roll. Table 3 shows the result obtained by collecting a roll central portion from the inner layer, and analyzing the composition thereof. Since the composition of the outer layer was almost the same as that of the melt, the result similarly obtained for the outer layer is not shown. 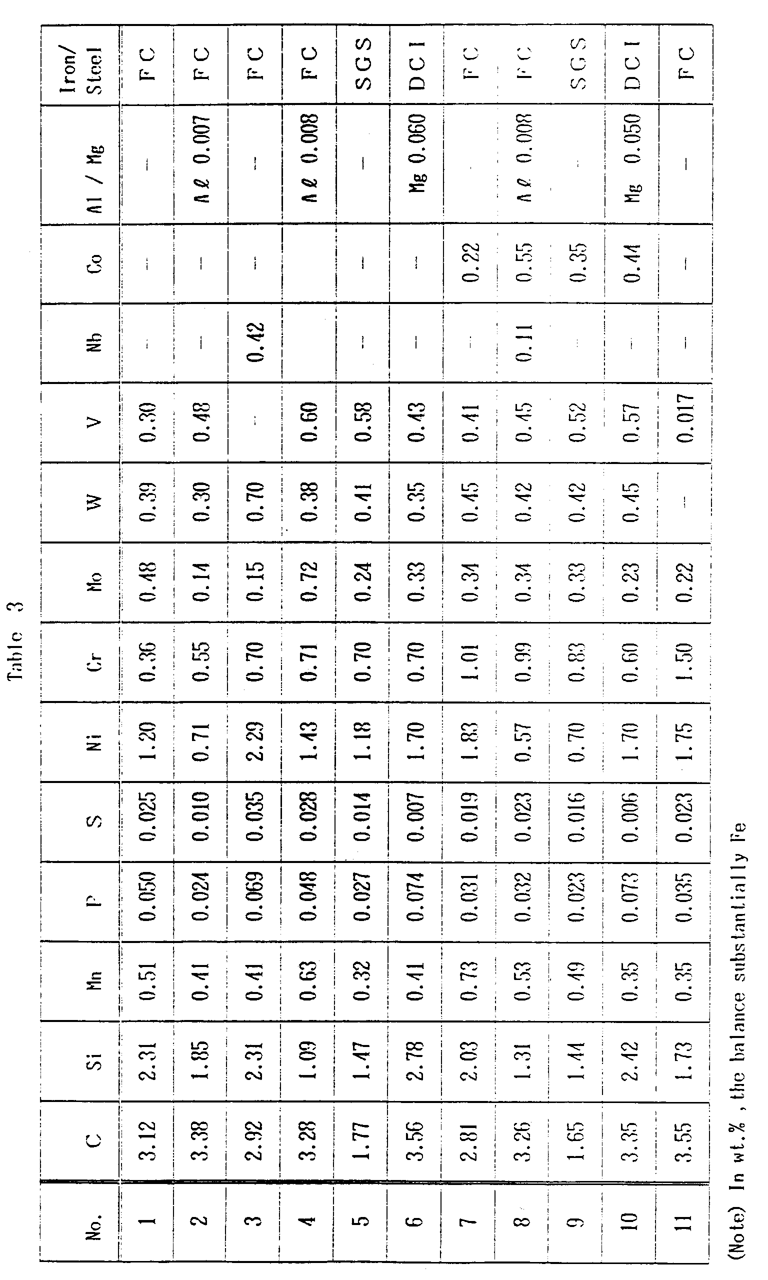
(5) A platelike test piece was collected from the outer layer, and a rotary wheel was pressed against the test piece as positioned fixedly to measure the resulting amount of specific abrasion. Table 4 shows the result.

| Test conditions | |
|---|---|
| Material of wheel: | SUJ 2 as carburized and hardened (H_{R}C 60-62). |
| Initial load: | 18.0 kgf. |
| Sliding speed: | 3.4 m/sec. |
| Sliding distance: | 200 m. |

**Table 4**

| No. | 1 | 2 | 3 | 4 | 5 | 6 | 7 | 8 | 9 | 10 | 11 |
|---|---|---|---|---|---|---|---|---|---|---|---|
| Amount* | 67 | 33 | 24 | 26 | 35 | 33 | 58 | 21 | 26 | 24 | 129 |

| | | | | | | | | | | | |
|---|---|---|---|---|---|---|---|---|---|---|---|
| * Amount = amount of specific abrasion (10⁻⁹ mm²/kg) | | | | | | | | | | | |

Table 4 reveals that the materials of Examples (No. 1 to 10) were 7 to 22 times as high as Conventional Example (No. 11) in abrasion resistance.

### Example B

(1) Each of the molten outer layer materials listed in Table 5 was cast in a mold, 600 mm in inside diameter, using a horizontal centrifugal casting apparatus. After an outer layer solidified completely, the molten intermediate layer material listed in the same table was centrifugally cast to form an intermediate layer as fused to the inner surface of the outer layer. After the intermediate layer solidified completely, the rotation of the mold was discontinued, the centrifugal casting mold was fitted to an upper mold member and a lower mold member installed in advance, and the molten inner layer material in Table 5 was poured into the assembly from its upper portion to form an inner layer as fused to the intermediate layer. The amounts of melts poured in were 70 mm for the outer layer and 25 mm for the intermediate layer in terms of the wall thickness. The pouring temperature for the outer layer was the solidification starting temperature plus 50° C. 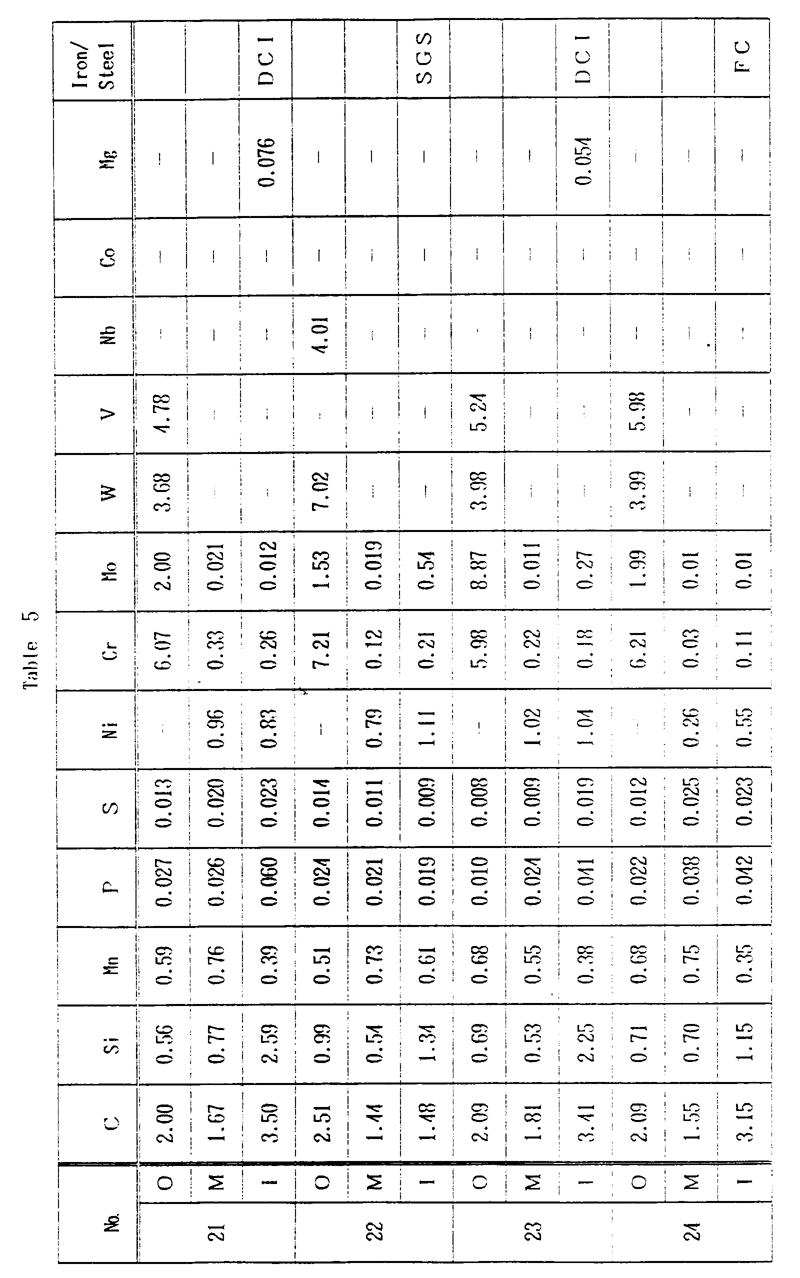 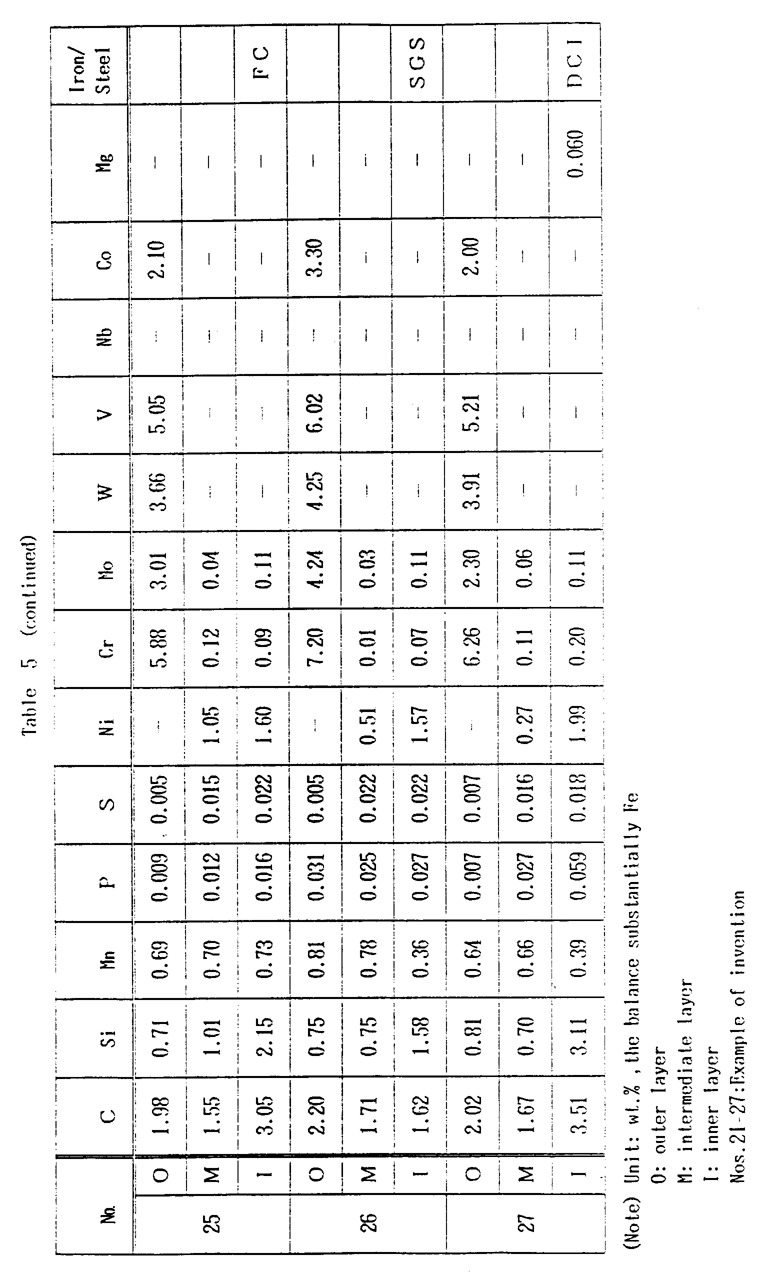
(2) The roll was roughly machined, then held at 1050° C for 5 hours and thereafter cooled to 550° C at a rate of 450° C/hr. Subsequently, the roll was slowly cooled to room temperature at a rate of 20° C/hr. Next, the roll was heat-treated twice for tempering by holding the roll at 550° C for 20 hours. Table 6 shows the result obtained by measuring the surface hardness of the outer layer obtained by the heat treatment.

**Table 6**

| No. | 21 | 22 | 23 | 24 | 25 | 26 | 27 |
|---|---|---|---|---|---|---|---|
| Hardness (Hs) | 83 | 86 | 85 | 83 | 83 | 86 | 83 |

(3) The surface of trunk of the roll was machined for finishing and then checked by ultrasonic inspection for layer-to-layer fusion to obtain a satisfactory result. Next, the roll trunk portion was cut and the section of the outer layer was observed with the unaided eye in the same manner as in Example A. No segregation of components was found in any roll. Table 7 shows the results obtained by analyzing the compositions of the midportion of thickness of the intermediate layer and the central portion of the inner layer. It is seen that only very small amounts of high alloy components of the outer layer were incorporated in the inner layer. 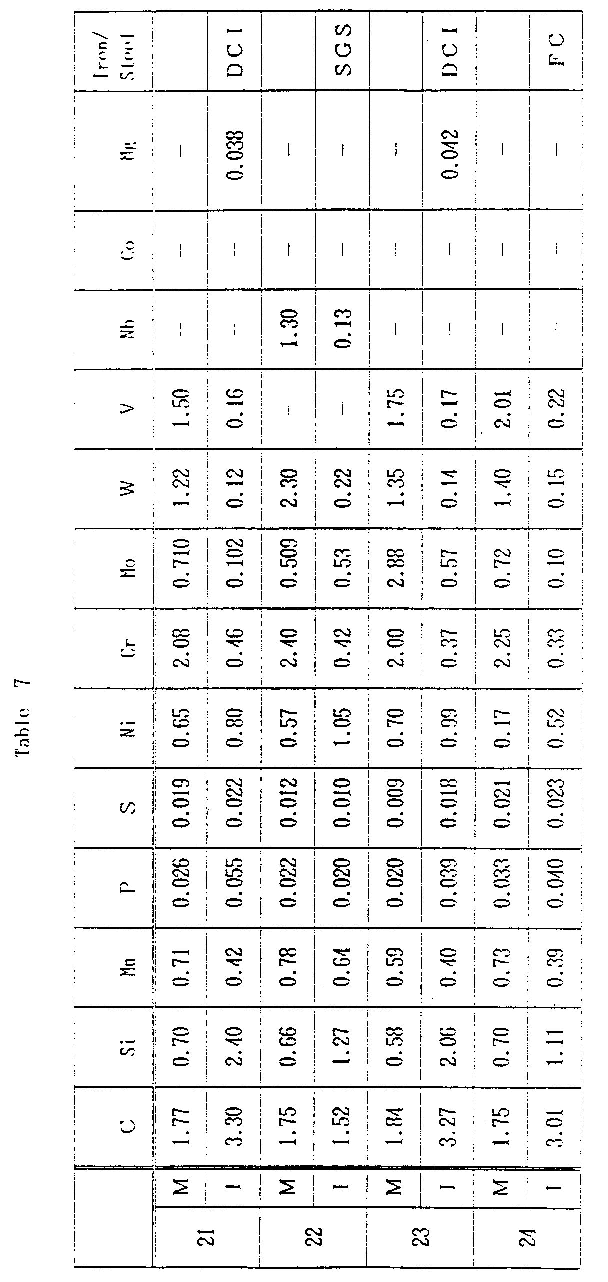 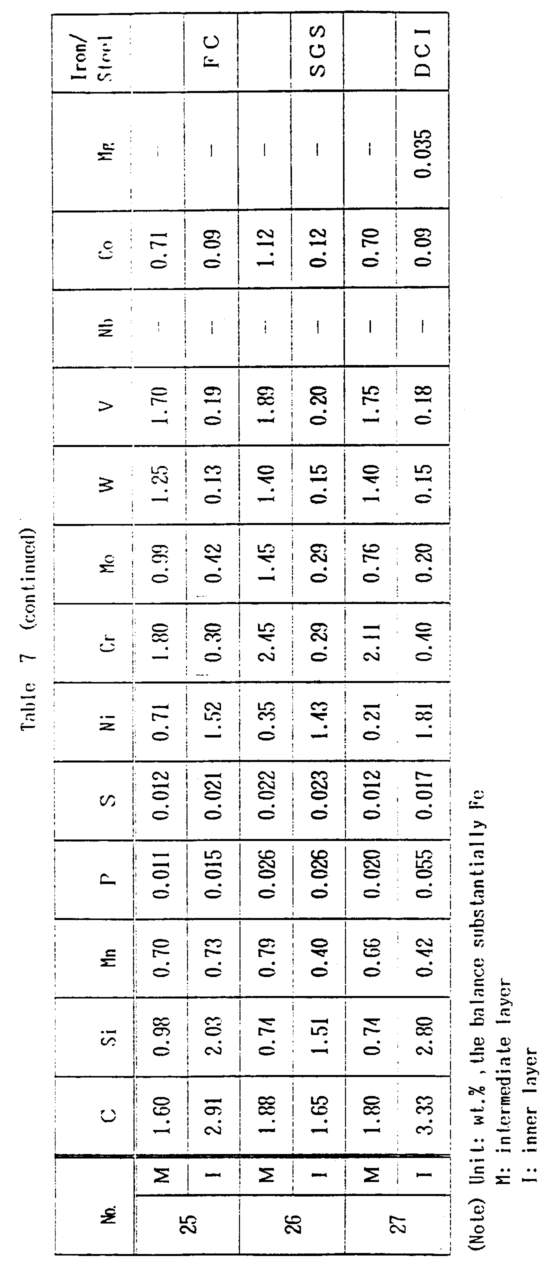
(4) A test piece was collected from the outer layer and tested for abrasion in the same manner as in Example A with the result shown in Table 8, which indicates that the materials had excellent abrasion resistance.

**Table 8**

| No. | 21 | 22 | 23 | 24 | 25 | 26 | 27 |
|---|---|---|---|---|---|---|---|
| Amount* | 37 | 29 | 29 | 34 | 28 | 21 | 27 |

| | | | | | | | |
|---|---|---|---|---|---|---|---|
| * Amount = amount of specific abrasion (10⁻⁹ mm²/kg) | | | | | | | |

### Example C

(1) Each of the molten outer layer materials listed in Table 9 below was poured into a horizontal or vertical centrifugal casting mold (420 mm in inside diameter) in an amount corresponding to 50 mm in wall thickness. The number of revolutions of the mold of either type was set to 100 in terms of G number. Table 10 shows the casting method and the difference between the pouring temperature and the solidification starting temperature. In each of Examples, the solidification starting temperature was about 1330° C. No. 31 to No. 38 are all materials of the invention.

**Table 9**

| No. | C | Si | Mn | P | S | Cr | Mo | W | V | Nb | Co | Aℓ |
|---|---|---|---|---|---|---|---|---|---|---|---|---|
| 31 | 2.07 | 0.65 | 0.60 | 0.022 | 0.014 | 5.60 | 2.01 | 3.86 | 4.63 | - | - | - |
| 32 | | | | | | | | | | | | |
| 33 | 2.08 | 0.73 | 0.73 | 0.023 | 0.017 | 6.33 | 4.24 | 4.31 | 4.98 | 1.00 | 3.10 | 0.055 |
| 34 | | | | | | | | | | | | |
| 35 | 2.07 | 0.61 | 0.57 | 0.023 | 0.014 | 5.64 | 2.00 | 3.54 | 4.73 | - | - | 0.024 |
| 36 | 1.96 | 0.58 | 0.63 | 0.019 | 0.011 | 5.71 | 7.77 | 3.80 | 4.79 | - | - | 0.047 |
| 37 | 2.07 | 0.73 | 0.73 | 0.022 | 0.016 | 6.22 | 4.22 | 4.03 | 4.79 | 0.98 | 3.00 | 0.068 |
| 38 | | | | | | | | | | | | |
| (Note) Unit: wt.% , the balance substantially Fe | | | | | | | | | | | | |

**Table 10**

| No. | Centrifugal casting method | Temperature difference (° C) |
|---|---|---|
| 31 | Horizontal | 100 |
| 32 | Horizontal | 50 |
| 33 | Horizontal | 60 |
| 34 | Horizontal | 120 |
| 35 | Vertical | 100 |
| 36 | Vertical | 100 |
| 37 | Vertical | 60 |
| 38 | Vertical | 120 |

(2) After casting, each of the outer layers was maintained at 1000° C for 3 hours, then cooled and thereafter annealed at 550° C for 10 hours.
(3) After the heat treatment, the outer layer was cut axially thereof over the entire length, and the longitudinal section was observed with the unaided eye. Local slight segregation was found in the outer layers of No. 31 and No. 34, but the other outer layers were found free from any segregation.

## Claims

1. An abrasion-resistant cast iron material for rolling rolls having a chemical composition comprising in wt. %:
1.0-3.0% of C, 0.1-2.0% of Si, 0.1-2.0% of Mn,
3.0-10.0% of Cr, 0.1-9.0% of Mo. 1.5-10.0% of W,
0.01-0.50% of Al, 0.01-0,50% of Ti optionally, 0,5-7,0% of Co
one or both of V and Nb in a combined amount of 3.0-10.0%, balance Fe apart from impurities.

2. A composite roll comprising an outer layer formed by centrifugal casting, and an inner layer formed on the inner surface of the outer layer by casting, the two layers being fused to each other, the composite roll being characterized in that the outer layer is made of the abrasion-resistant cast iron material as defined in claim 1, the inner layer being made of flaky graphite cast iron, spheroidal graphite cast iron or spheroidal graphite cast steel.

3. A composite roll as defined in claim 2 wherein the flaky graphite cast iron has a chemical composition comprising in wt. %:
2.5-4.0% of C, 0.8-2.5% of Si, 0.2-1.5% of Mn,
up to 0.2% of P, up to 0.2% of S, 0.5-3.0% of Ni,
up to 2.0% of Cr, up to 2.0% of Mo,
W, V, Nb and Co in a combined amount of up to 4%, and Fe in a substantial amount,
the spheroidal graphite cast iron having a chemical composition comprising in wt. %:
2.5-4.0% of C, 1.3-3.5% of Si, 0.2-1.5% of Mn,
up to 0.2% of P, up to 0.2% of S, 0.5-3.0% of Ni,
up to 2.0% of Cr, up to 2.0% of Mo,
W, V, Nb and Co in a combined amount of up to 4%, 0.02-0.1% of Mg, and Fe in a substantial amount, the spheroidal graphite cast steel having a chemical Composition comprising in wt. %:
1.0-2.3% of C, 0.5-3.0% of Si, 0.2-1.5% of Mn,
up to 0.2% of P, up to 0.2% of S, 0.5-3.0% of Ni,
up to 2.0% of Cr, up to 2.0% of Mo,
W, V, Nb and Co in a combined amount of up to 4%, and Fe in a substantial amount.

4. A composite roll as defined in claim 2 wherein the outer layer is formed by vertical centrifugal casting.

5. A composite roll comprising an outer layer formed by centrifugal casting, an intermediate layer formed on the inner surface of the outer layer by centrifugal casting, and an inner layer formed on the inner surface of the intermediate layer by casting, the outer layer and the intermediate layer being fused to each other, the intermediate layer and the inner layer being fused to each other, the composite roll being characterized in that the outer layer is made of the abrasion-resistant cast iron material as defined in claim 1, the intermediate layer being made of high-carbon cast steel, the inner layer being made of flaky graphite cast iron, spheroidal graphite cast iron or spheroidal graphite cast steel.

6. A composite roll as defined in claim 5 wherein the high-carbon cast steel has a chemical composition comprising in wt. %:
1.0-2.5% of C, 0.5-1.5% of Si, 0.2-1.5% of Mn,
up to 0.2% of P, up to 0.2% of S, up to 1.5% of Ni,
up to 2.0% of Cr, up to 2.0% of Mo,
W, V, Nb and Co in a combined amount of up to 8%, and
Fe in a substantial amount,
the flaky graphite cast iron having a chemical composition comprising in wt. %:
2.5-4.0% of C, 0.8-2.5% of Si, 0.2-1.5% of Mn,
up to 0.2% of P, up to 0.2% of S, 0.5-3.0% of Ni,
up to 2.0% of Cr, up to 2.0% of Mo,
W, V, Nb and Co in a combined amount of up to 4%, and
Fe in a substantial amount,
the spheroidal graphite cast iron having a chemical composition comprising in wt. %:
2.5-4.0% of C, 1.3-3.5% of Si, 0.2-1.5% of Mn,
up to 0.2% of P, up to 0.2% of S, 0.5-3.0% of Ni,
up to 2.0% of Cr, up to 2.0% of Mo,
W, V, Nb and Co in a combined amount of up to 4%,
0.02-0.1% of Mg, and Fe in a substantial amount,
the spheroidal graphite cast steel having a chemical composition comprising in wt. %:
1.0-2.3% of C, 0.5-3.0% of Si, 0.2-1.5% of Mn,
up to 0.2% of P, up to 0.2% of S, 0.5-3.0% of Ni,
up to 2.0% of Cr, up to 2.0% of Mo,
W, V, Nb and Co in a combined amount of up to 4%, and
Fe in a substantial amount.

7. A composite roll as defined in claim 5 wherein the outer layer is formed by vertical centrifugal casting.

## Patentansprüche

1. Abriebfestes Gußeisenmaterial mit einer chemischen Zusammensetzung in Gewichtsprozent:
1,0-3,0% C, 0,1-2,0% Si, 0,1-2,0% Mn,
3,0-10,0% Cr, 0,1-9,0% Mo, 1,5-10,0% W,
0,01-0,50% Al, 0,01-0,50% Ti, fakultativ 0,5-7,0% Co,
V und Nb in einer kombinierten Menge von 3,0-10,0%, Rest Eisen, ausgenommen Verunreinigungen.

2. Zusammengesetzte Rolle mit einer äußeren Schicht, die durch Zentrifugalguß hergestellt ist, und einer inneren Schicht, die auf der inneren Oberfläche der äußeren Schicht durch Gießen hergestellt ist, wobei die beiden Schichten miteinander verschmolzen sind, welche zusammengesetzte Rolle dadurch **gekennzeichnet** ist, daß die äußere Schicht aus dem abriebfesten Gußeisenmaterial gemäß Anspruch 1 besteht und die innere Schicht aus Flockengraphit-Gußeisen, Kugelgraphit-Gußeisen oder Kugelgraphit-Gußstahl besteht.

3. Zusammengesetzte Rolle nach Anspruch 2, bei der das Flockengraphit-Gußeisen eine chemische Zusammensetzung in Gewichtsprozent hat:
2,5-4,0% C, 0,8-2,5% Si, 0,2-1,5% Mn,
bis 0,2% P, bis 0,2% S, 0,5-3,0% Ni,
bis 2,0% Cr, bis 2,0% Mo,
W, V, Nb und Co in einer kombinierten Menge von bis zu 4%, Fe in einer erheblichen Menge,
wobei das Kugelgraphit-Gußeisen eine chemische Zusammensetzung in Gewichtsprozent hat:
2,5-4,0% C, 1,3-3,5% Si, 0,2-1,5% Mn,
bis 0,2% P, bis 0,2% S, 0,5-3,0% Ni,
bis 2,0% Cr, bis 2,0% Mo,
W, V, Nb und Co in einer kombinierten Menge von bis zu 4%, 0,02-0,1% Mg, Fe in einer erheblichen Menge,
wobei der Kugelgraphit-Gußstahl eine chemische Zusammensetzung in Gewichtsprozent hat:
1,0-2,3% C, 0,5-3,0% Si, 0,2-1,5% Mn,
bis 0,2% P, bis 0,2% S, 0,5-3,0% Ni,
bis 2,0% Cr, bis 2,0% Mo,
W, V, Nb und Co in einer kombinierten Menge von bis zu 4% und Fe in einer erheblichen Menge.

4. Zusammengesetzte Rolle nach Anspruch 2, bei der die äußere Schicht durch Vertikal-Zentrifugalguß hergestellt ist.

5. Zusammengesetzte Rolle mit einer äußeren Schicht, die durch Zentrifugalguß hergestellt ist, eine Zwischenschicht, die auf der inneren Oberfläche der äußeren Schicht durch Zentrifugalguß hergestellt ist, und einer inneren Schicht, die auf der inneren Oberfläche der Zwischenschicht durch Gießen hergestellt ist, wobei die äußere Schicht und die Zwischenschicht miteinander verschmolzen sind und die Zwischenschicht und die innere Schicht miteinander verschmolzen sind, welche zusammengesetzte Rolle dadurch **gekennzeichnet** ist, daß die äußere Schicht aus dem abriebfesten Gußeisenmaterial gemäß Anspruch 1 besteht, daß die Zwischenschicht aus einem Gußstahl mit hohem Kohlenstoffgehalt hergestellt ist, daß die Innenschicht aus Flockengraphit-Gußeisen, Kugelgraphit-Gußeisen oder Kugelgraphit-Gußstahl hergestellt ist.

6. Zusammengesetzte Rolle nach Anspruch 5, bei der der Gußstahl mit hohem Kohlenstoffgehalt eine chemische Zusammensetzung in Gewichtsprozent hat:
1,0-2,5% C, 0,5-1,5% Si, 0,2-1,5% Mn,
bis 0,2% P, bis 0,2% S, bis 1,5% Ni,
bis 2,0% Cr, bis 2,0% Mo,
W, V, Nb und Co in einer kombinierten Menge von bis zu 8% und Fe in einer erheblichen Menge,
wobei das Flockengraphit-Gußeisen eine chemische Zusammensetzung in Gewichtsprozent hat:
2,5-4,0% C, 0,8-2,5% Si, 0,2-1,5% Mn,
bis 0,2% P, bis 0,2% S, 0,5-3,0% Ni,
bis 2,0% Cr, bis 2,0% Mo,
W, V, Nb und Co in einer kombinierten Menge von bis zu 4% und Fe in einer erheblichen Menge,
wobei das Kugelgraphit-Gußeisen eine chemische Zusammensetzung in Gewichtsprozent hat:
2,5-4,0% C, 1,3-3,5% Si, 0,2-1,5% Mn,
bis 0,2% P, bis 0,2% S, 0,5-3,0% Ni,
bis 2,0% Cr, bis 2,0% Mo,
W, V, Nb und Co in einer kombinierten Menge von bis zu 4%, 0,02-0,1% Mg und Fe in einer erheblichen Menge,
wobei der Kugelgraphit-Gußstahl eine chemische Zusammensetzung in Gewichtsprozent hat:
1,0-2,3% C, 0,5-3,0% Si, 0,2-1,5% Mn,
bis 0,2% P, bis 0,2% S, 0,5-3,0% Ni,
bis 2,0% Cr, bis 2,0% Mo,
W, V, Nb und Co in einer kombinierten Menge von bis zu 4% und Fe in einer erheblichen Menge.

7. Zusammengesetzte Rolle gemäß Anspruch 5, bei der die äußere Schicht durch Vertikal-Zentrifugalguß hergestellt ist.

## Revendications

1. Matériau de fonte résistant à l'abrasion pour rouleaux de laminage, ayant une composition chimique comprenant, en % en poids :
1,0 à 3,0 % de C, 0,1 à 2,0 % de Si, 0,1 à 2,0 % de Mn,
3,0 à 10,0 % de Cr, 0,1 à 9,0 % de Mo, 1,5 à 10,0 % de W,
0,01 à 0,50 % de Al, 0,01 à 0,50 % de Ti éventuellement, 0,5 à 7,0 % de Co
l'un de V et de Nb, ou les deux, en une teneur combinée de 3,0 à 10,0 %, le reste étant Fe les impuretés mises à part.

2. Rouleau composite comprenant une couche externe formée par coulée centrifuge et une couche interne formée sur la surface interne de la couche externe par coulée, les deux couches étant fusionnées l'une à l'autre, le rouleau composite étant caractérisé en ce que la couche externe est constituée du matériau de fonte résistant à l'abrasion tel que défini dans la revendication 1, la couche interne étant constituée de fonte contenant du graphite lamellaire, de fonte contenant du graphite sphéroïdal ou d'acier coulé contenant du graphite sphéroïdal.

3. Rouleau composite selon la revendication 2, dans lequel la fonte contenant du graphite lamellaire a une composition chimique comprenant, en % en poids :
2,5 à 4,0 % de C, 0,8 à 2,5 % de Si, 0,2 à 1,5 % de Mn,
jusqu'à 0,2 % de P, jusqu'à 0,2 % de S, 0,5 à 3,0 % de Ni,
jusqu'à 2,0 % de Cr, jusqu'à 2,0 % de Mo,
W, V, Nb et Co en une teneur combinée jusqu'à 4 %, et Fe en une teneur substantielle,
la fonte contenant du graphite sphéroïdal ayant une composition chimique comprenant, en % en poids :
2,5 à 4,0 % de C, 1,3 à 3,5 % de Si, 0,2 à 1,5 % de Mn,
jusqu'à 0,2 % de P, jusqu'à 0,2 % de S, 0,5 à 3,0 % de Ni,
jusqu'à 2,0 % de Cr, jusqu'à 2,0 % de Mo,
W, V, Nb et Co en une teneur combinée jusqu'à 4 %, 0,02 à 0,1 % de Mg, et Fe en une teneur substantielle,
l'acier coulé contenant du graphite sphéroïdal ayant une composition chimique comprenant, en % en poids :
1,0 à 2,3 % de C, 0,5 à 3,0 % de Si, 0,2 à 1,5 % de Mn,
jusqu'à 0,2 % de P, jusqu'à 0,2 % de S, 0,5 à 3,0 % de Ni,
jusqu'à 2,0 % de Cr, jusqu'à 2,0 % de Mo,
W, V, Nb et Co en une teneur combinée jusqu'à 4 %, et Fe en une teneur substantielle.

4. Rouleau composite selon la revendication 2, dans lequel la couche externe est formée par coulée centrifuge verticale.

5. Rouleau composite comprenant une couche externe formée par coulée centrifuge, une couche intermédiaire formée sur la surface interne de la couche externe par coulée centrifuge, et une couche interne formée sur la surface interne de la couche intermédiaire par coulée, la couche externe et la couche intermédiaire étant fusionnées l'une à l'autre, la couche intermédiaire et la couche interne étant fusionnées l'une à l'autre, le rouleau composite étant caractérisé en ce que la couche externe est constituée du matériau de fonte résistant à l'abrasion tel que défini dans la revendication 1, la couche intermédiaire étant constituée d'acier coulé à haute teneur en carbone, la couche interne étant constituée de fonte contenant du graphite lamellaire, de fonte contenant du graphite sphéroïdal ou d'acier coulé contenant du qraphite sphéroïdal.

6. Rouleau composite selon la revendication 5, dans lequel l'acier coulé à haute teneur en carbone a une composition chimique comprenant, en % en poids :
1,0 à 2,5 % de C, 0,5 à 1,5 % de Si, 0,2 à 1,5 % de Mn,
jusqu'à 0,2 % de P, jusqu'à 0,2 % de S, jusqu'à 1,5 % de Ni,
jusqu'à 2,0 % de Cr, jusqu'à 2,0 % de Mo,
W, V, Nb et Co en une teneur combinée jusqu'à 8 %, et Fe en une teneur substantielle,
la fonte contenant du graphite lamellaire ayant une composition chimique comprenant, en % en poids :
2,5 à 4,0 % de C, 0,8 à 2,5 % de Si, 0,2 à 1,5 % de Mn,
jusqu'à 0,2 % de P, jusqu'à 0,2 % de S, 0,5 à 3,0 % de Ni,
jusqu'à 2,0 % de Cr, jusqu'à 2,0 % de Mo,
W, V, Nb et Co en une teneur combinée jusqu'à 4 %, et Fe en une teneur substantielle,
la fonte contenant du graphite sphéroïdal ayant une composition chimique comprenant, en % en poids :
2,5 à 4,0 % de C, 1,3 à 3,5 % de Si, 0,2 à 1,5 % de Mn,
jusqu'à 0,2 % de P, jusqu'à 0,2 % de S, 0,5 à 3,0 % de Ni,
jusqu'à 2,0 % de Cr, jusqu'à 2,0 % de Mo,
W, V, Nb et Co en une teneur combinée jusqu'à 4 %, 0,02 à 0,1 % de Mg, et Fe en une teneur substantielle,
l'acier coulé contenant du graphite sphéroïdal ayant une composition chimique comprenant, en % en poids :
1,0 à 2,3 % de C, 0,5 à 3,0 % de Si, 0,2 à 1,5 % de Mn,
jusqu'à 0,2 % de P, jusqu'à 0,2 % de S, 0,5 à 3,0 % de Ni,
jusqu'à 2,0 % de Cr, jusqu'à 2,0 % de Mo,
W, V, Nb et Co en une teneur combinée jusqu'à 4 %, et Fe en une teneur substantielle.

7. Rouleau composite selon la revendication 5, dans lequel la couche externe est formée par coulée centrifuge verticale.
